# EUROPEAN PATENT SPECIFICATION

(11) **EP 1 128 500 B1**
(45) Date of publication and mention of the grant of the patent: **15.09.2004**
(21) Application number: 01104149.8
(22) Date of filing: 21.02.2001
(51) Int. Cl.: H01S 3/038, H01S 3/225

(54) **Modular pre-adjustable gas laser discharge unit**
Voreinstellbare modulare Gaslaserentladungseinheit
Unité modulaire préréglable de décharge pour laser à gaz

(30) Priority: 22.02.2000 US 510538; 22.02.2000 US 510539
(43) Date of publication of application: 29.08.2001
(73) Proprietor: TuiLaser AG, 82110 Germering (DE)
(72) Inventor: Kodeda, Hans, 84166 Adlkofen (DE); Strowitzki, Claus, 82205 Gilching (DE)
(74) Representative: Hofstetter, Alfons J., Dr.rer.nat.

(56) References cited:
- WO-A-99/60674
- FR-A- 2 698 496

## Description

The present invention relates to gas discharge lasers, in particular to excimer lasers, and more particularly to a discharge unit for an excimer laser, wherein a high voltage is supplied to two discharge electrodes.

Excimer lasers provide high intensity laser radiation in the ultraviolet spectral range. This makes them important tools especially for medical and surgical applications as well as other industrial applications.

Excimer lasers are gas discharge lasers, which use a rare gas such as argon and a halide gas such as fluor (for example AF excimer laser) or a gas containing a halide (for example F₂) as the laser gas.

Generally, in an excimer laser a gas mixture containing the active component and other gases is steadily provided to a discharge gap between a pair of elongated electrodes inside the laser tube by means of a fan or the like. A high voltage applied between the two electrodes causes a gas discharge in said discharge gap, whereby, from the active component, short-lived excited-state molecules are generated, whose dissociation generates ultraviolet radiation constituting the laser radiation. To increase the homogeneity of the gas discharge, in present excimer lasers a pre-ionization of the laser gas by pre-ionizers is used. As the used laser gas needs to regenerate before it can be reused, excimer lasers are generally operated in a pulsed operation mode, wherein the fan is steadily replacing the laser gas in the discharge gap.

The discharge electrodes of an excimer laser are usually located inside the laser tube.

The housing of an excimer laser generally consists of a metal tube having openings in a cylindrical wall on the upper side thereof. The open upper side is covered by an insulating plate. The metal tube and one of the discharge electrodes are grounded. A high voltage is applied to the second discharge electrode via a HV duct extending through the insulating plate.

The width of the discharge gap between the two electrodes has to be adjusted very accurately, so as to achieve a homogeneous gas discharge in the discharge gap.

The optical axis of the laser beam is formed by the arrangement of the two opposite electrodes. The electrodes in the laser tube have to be adjusted lengthwise and perpendicular to the optical axis. This has to be done very accurately to avoid arcing between the electrodes and to avoid hot spots in the excimer laser beam profile.

Present excimer lasers are constructed by first providing a laser tube, and then most of the parts constituting the laser are mounted into the tube one by one. In particular, usually the laser tube consists of two parts, e.g. a main part and a cover. One discharge electrode is mounted to the main part of the laser tube, and the other discharge electrode is mounted to the cover. After this, the main part and the cover are connected, so as to close the laser tube. As a result, the discharge electrodes are assembled, so as to generate the discharge gap between them. The accuracy of the discharge gap is determined by the accuracy of the joint between the main part and the cover of the laser tube. This makes a correct adjustment of the discharge electrodes with respect to each other difficult.

Such an assembly is explained for example in U.S. Patent 5,771,258.

In other more flexible arrangements, the electrodes can be adjusted to each other in the premounted tube. This is usually done by a gauge, which is placed in between the electrodes from both sides of the premounted laser tube.

From the FR 2 698 496 a laser discharge unit is known wherein upon a support like an elongated electrode plate were mounted first and second electrodes connected to the respective phases of a high voltage power supply. The electrodes were building with the elongated electrode plate a free fabricable unit which can be

mounted in an opening in the housing of the discharged tube of a gas laser, whereby the support is part of the housing formed by the tube.

Such a laser discharge unit for a gas laser and in particular for an excimer laser is easy to handle and yet powerful. Further it enables an accurate and yet easy adjustment of the discharge electrode to form an accurate and even, homogeneous discharge gap.

The present invention may be used in conjunction with the inventions described in the patent publications EP 1128498 A, EP 1130698 A, US 6493375 B US 6603790 B, and US 6480517 B.

It is an object of the present invention to provide a laser discharge unit having as few as possible mounting elements for the assembly of the unit in order to reduce cost and weight. It is a further object of the invention to reduce the size of any access which has to be provided within the housing of a laser and which has to be sealed with a covering in order to separate the inner gas atmosphere of the laser discharge chamber from the outer atmosphere.

The above and further objects of the invention are achieved by a modular, pre-adjustable gas laser discharge unit, which is pre-assembled and pre-adjustable before the discharge unit is mounted into the laser tube. The objects are in particular achieved by a laser discharge unit, comprising an elongated electrode plate, and an elongated high voltage electrode, an elongated ground electrode, and an insulator, wherein both the high voltage electrode and the ground electrode are mounted to the electrode plate and the insulator electrically isolates the high voltage electrode from the electrode plate.Thereby the high-voltage electrode and a ground electrode are mounted to be placed in a distance one from another so they were having a spaced apart a relationship one from another.

By mounting both, the high voltage electrode and the ground electrode to the electrode plate, the electrode plate and electrodes are formed into a modular discharge unit. This means, that the gas discharge gap can be adjusted independently of the mounting of the discharge unit into the laser tube.

Further at least one high voltage duct extends through the electrode plate for providing a high voltage to the high voltage electrode. The high voltage duct comprises a conductive core connected to the high voltage electrodes and an insulator for electrically insulating the high voltage core and electrode from the electrode plate. A tubular elongated insulator is preferably used for insulating the high voltage core from the electrode plate.

The laser discharge unit according to the invention is defined in claim 1.

Thus, the laser discharge unit according to the invention preferably comprises, as high voltage ducts, a plurality of waveguide-like coaxial ducts extending through the electrode plate and comprising respectively a central conductive core and an insulator element, preferably made of a ceramic material electrically insulating the core from the electrode plate. The high voltage electrode is electrically connected to the cores of the ducts, and the ground electrode is electrically connected to the electrode plate. By virtue of the coaxial ducts, each is reliably electrically isolated from one another.

It is preferred, that the ducts are inserted into the electrode plate respectively with a defined tolerance between the insulator element and the respective hole in the electrode plate through which the respective duct is inserted. As a result, the ducts are held fixed in a defined position. According to an alternative of the invention this fixing can be achieved solely by fixing elements, such as bolts or screws or a tube, by which the respective duct is held in its hole in a fixed position.

Preferably a gastight seal is provided between said ducts and said electrode plate. Alternatively a seal can be provided outside the laser tube, for example at the end of the ducts. For practical reasons the holes in the electrode plate and the ducts preferably have a round cross-section. In this case the gastight seals are ring-shaped. The holes can just as well have a square, a rectangular, an oval, an oblong or any other cross-section. The ducts and the gastight seals then would have a corresponding shape. However, ring-shaped seals have the advantage that they are easier to fabricate and to handle, more reliable, and furthermore they are cheaper than for example rectangular seals. On the other hand it is preferred that a metal seal is used, as metal seals are more resistant against corrosion by the aggressive laser gas and laser radiation. If in this case a ring-shaped seal is used, a commercial metal seal can be used.

The laser discharge unit preferably further comprises a sleeve enclosing the core and insulator of each duct. Each sleeve includes an inner end supported by the electrode plate, and an outer free end. Each core preferably includes an inner end connected to the high voltage electrode and a threaded outer free end extending beyond the free end of the sleeve. A nut or other fastening means may be screwed onto the threaded end, thereby pressing the sleeve against the electrode plate and tensioning the core by pulling it. As those skilled in the art will recognize, any other construction for fixing the duct to the electrode via the core or via the insulator element is possible as well. Preferably a screw, which comprises a thread at both of its ends, such as a threaded bolt, is used to connect the inner end of the core to the high voltage electrode.

The core and the insulator of each duct are preferably fixed with respect to each other. This may be accomplished, for example, by providing the inner end of each core with a shoulder that is pressed against the insulator by the tensioned core. A seal is preferably provided between the shoulder of each core and the corresponding ceramics insulator. But it is also possible, that the core comprises a recess, into which a shoulder provided on the insulator is inserted. Alternatively, the core and the insulator may be fixed with respect to each other by some different construction.

The insulator element may be pressed against the electrode plate by means of the tensioned core via the shoulder at the inner end of the core and a shoulder on the insulator element. Preferably a seal is provided between the insulator shoulder and the electrode plate.

A sealing ring also preferably surrounds each sleeve. The sealing ring should have at its outer circumference a flange that is supported by an outer rim of a hole in the tube through which the respective duct is inserted. The electrode plate may also be provided with a ring shoulder supported at an inner rim of the tube. The sealing ring and the electrode plate may then be connected, for example, by screws. A seal is preferably provided between the electrode plate shoulder and the inner rim of the tube.

The ground electrode is preferably carried by, or mounted to, the electrode plate. Preferably a plurality of flow guides is used for this purpose. The flow guides are preferably made from sheets of metal that extend between the electrode and ground electrode in a plane perpendicular to the longitudinal axis of the electrodes. The flow guides typically comprise an upper flange, a lower flange, and a central flow-guiding portion integrally connecting the upper flange to the lower flange. The upper and lower flanges extend perpendicular to each other and to said central flow guiding portion. The upper flange is attached to a side face of said electrode plate, and the lower flange is attached to a bottom face of the ground electrode. Preferably the central flow guiding portion is aerodynamically profiled in order to minimize flow resistance and turbulences for maintaining a substantially laminar gas flow between the flow guides.

The central flow-guiding portion of the flow guides is preferably curved or angled in the plane extending perpendicular to the longitudinal axis of the electrodes, so as to connect the ground electrode and the electrode plate without crossing the gas discharge gap.

Alternatively to the use of flow guides, the ground electrode can be mounted to the electrode plate via two metal sheets, each connecting the ground electrode and the electrode plate at their longitudinal ends. The metal sheets would extend perpendicular to the longitudinal axis of the electrodes. Each sheet would comprise a hole at the level of the gas discharge gap, so as to allow a laser beam generated in the gas discharge gap to leave the discharge gap at a longitudinal end of the electrodes.

The preferred discharge unit further comprises a pair of standard corona pre-ionizers, that is a pair of elongated cylindrical pre-ionizers with a conductive core and a surrounding tube-shaped insulator. The pre-ionizers extend substantially parallel along opposite sides of the electrode. The insulator of the pre-ionizers can be TEFLON® , or any suited insulator, but it is preferably a ceramics material. It can also be a fluoride material. Alternatively, any other kind of known pre-ionizer can be used. The pre-ionizers are not necessary for the discharge unit to work. Indeed, excimer lasers were known before the invention of pre-ionizers. Pre-ionization, however makes the gas discharge between the high voltage electrode and the ground electrode more homogeneous and thus more reliable.

The corona-type pre-ionizers can be mounted immediately adjacent to the high voltage electrode, preferably at the opposing longitudinal edges of the high voltage electrode face that is facing the ground electrode.

A shadow plate may be mounted between the gas discharge gap and the insulator for protection of the insulator against the laser radiation irradiated from the gas discharge gap, and against light from the pre-ionizers.

The overall construction of the laser is such that at least the elongated electrode plate, the elongated high voltage electrode and the elongated ground electrode form a pre-mounted and pre-adjustable module-type discharge unit. It is preferred, that the pre-mounted module-type discharge unit, further comprises said high voltage ducts, said shadow plate and said corona pre-ionizers. Said discharge unit can be mounted to and removed from the laser tube as a whole. This provides several advantages. One advantage is that the gas discharge gap between the high voltage electrode and the ground electrode can be adjusted before the discharge unit is mounted into the laser tube, which facilitates an accurate adjustment of the gas discharge gap. Furthermore the mounting of the laser can be done in a more efficient manner.

The laser gas can, in the case of an excimer laser, be any excimer laser gas, such as KrF, ArF, XeF, XeBr, HgBr, HgCl, XeCI, HCI, F₂ and the like, or any laser gas in case of some other gas discharge laser.

Besides the laser gas, a buffer gas comprising a mixture of Helium, Neon and/or Argon is preferably provided in the tube.

Other objects, features and advantages of the invention will become apparent to those skilled in the art from the following description of the preferred embodiment taken together with the drawings.
FIGURE 1 is a partial cut-away side view of an excimer laser according to a preferred embodiment of the invention;
FIGURE 2 is a cross-sectional view of the excimer laser in Fig. 1 along Line 2-2;
FIGURE 3a shows a side view of a discharge unit according to a preferred embodiment of the invention;
FIGURE 3b shows a front view of the discharge unit of Fig. 3a;
FIGURE 3c shows a plan view of the discharge unit of Fig. 3a;
FIGURE 4 shows a detailed cross section of the discharge unit according to a preferred embodiment of the invention.

In the following a preferred embodiment of the invention will be set forth.

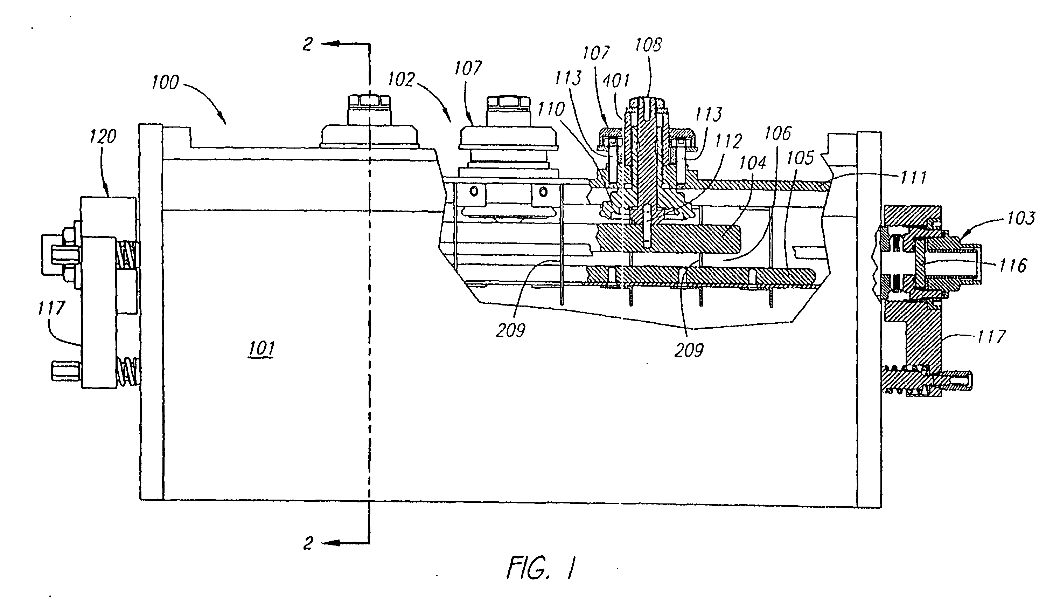

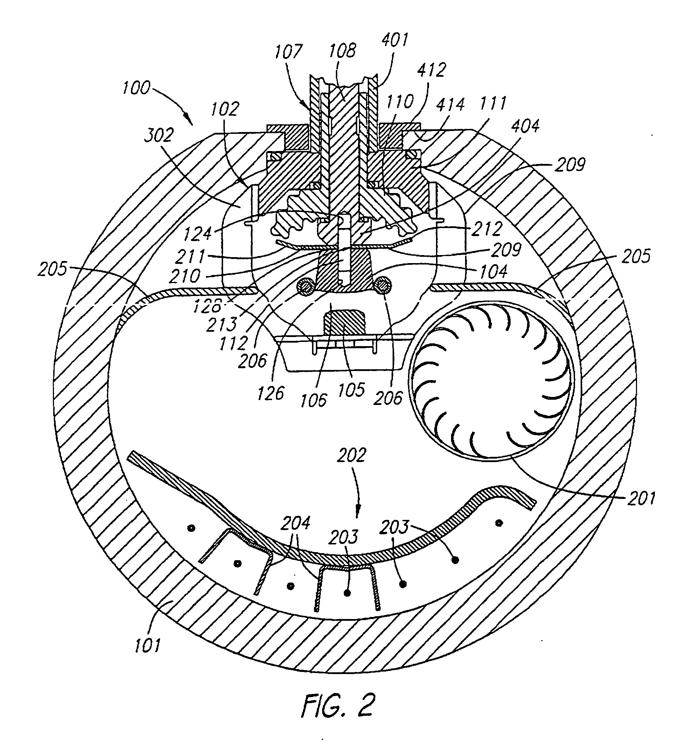

Figures 1 and 2 show an excimer laser 100 comprising a tube 101, a discharge unit 102, a circulation means 201, and a laser optical system 103.

The circulation means 201 is optional and may comprise, for example, a fan or any other means for circulating lasing gases in gas lasers.

The discharge unit 102 is mounted into the tube 101 and comprises a high voltage electrode 104 and a ground electrode 105. The high voltage electrode 104 and the ground electrode 105 are spaced apart from each other, thereby defining a gas discharge gap 106. A high voltage is applied to the high voltage electrode 104 via a plurality of high voltage ducts 107, which carry the high voltage electrode 104. Each high voltage duct 107 comprises a conductive core 108 and an insulator element 110 arranged around the conductive core 108. Each high voltage duct 107 is attached to the high voltage electrode using a suitable fastener. In the present embodiment, a double threaded stud bolt 112 is used to attach electrode 104 to each conductive core 108 of each duct 107.

Furthermore, discharge unit 102 is provided with an elongated electrode plate 111. The electrode plate 111 includes holes, through which the high voltage ducts 107 extend so as to be connected to the high voltage electrode 104. Each high voltage duct 107 is fixed to the electrode plate 111 by an attachment means, such as bolts 113. Those skilled in the art will appreciate, however, that any suitable attachment means may be used to fix ducts 107 to electrode plate 111.

The insulator elements 110 are preferably made of a ceramic material. Optionally, however, they may be made from other isolative materials, including, for example, a fluoride material. They have a shape which conically expands towards the high voltage electrode 104 and comprise a corrugated surface, so as to increase a path extending along said surface to avoid surface flashover between the high voltage electrode 104 and the grounded eiectrode plate iii.

As noted above, insulator elements 110 may be made from fluoride insulator material. These materials have the drawback of being relatively expensive. However, according to the preferred embodiment of the present invention, only a small amount of insulator material is required. Accordingly, the use of fluoride insulator materials is affordable in the present invention.

As illustrated in Fig. 2, discharge unit 102 also preferably comprises a shadow plate 210 disposed between the gas discharge gap 106 and the insulator element 110 for protecting the insulator element 110 against the corrosive effect of the laser gas and of the laser radiation. Shadow plate 210 is preferably made out of a metal, such as aluminum.

The excimer laser 100 is preferably a pulsed argon fluoride (ArF) excimer laser with a wavelength of about 193 nanometers. This means, argon fluoride gas is used for generating a laser beam. However, as those skilled in the art will appreciate, any of the known excimer laser gases may be used in connection with the present invention.

By applying a high voltage pulse on the order of 20 kV to the high voltage electrode 104, the laser gas (e.g., argon fluoride gas) and additionally helium and/or argon gas as a buffer gas in the discharge gap 106 generate a laser beam which is emitted through the laser optical system comprising a front optical system 103 and a rear optical system 120.

Laser 100 typically further comprises a front optical element 116, through which the laser beam emits. Optical element 116 may be provided, for example, in an optical system 103, which includes an adjustable mounting means 117 for adjusting the position of the optical element 116 in relation to the tube 101. Rear laser optical system 120 similarly includes an optical element 116 (not shown) and adjusting means 117. However, the optical element 116 of the rear laser optical system 120 comprises a totally reflective mirror rather than a partially reflective mirror. As those skilled in the art will appreciate, front and rear optical elements 116 may also be mounted directly in the end walls of the laser tube 101. Alternatively, they may be mounted on adjustable mounting brackets, which are separate from the laser tube 101 as is known in the art. A suitable laser optics system and adjustable mounting means for use in connection with the present invention as front and rear optical systems 103, 120 are described in the patent publications US 6493375 B and EP 1130698. Details of these applications are provided above.

Figure 2 is a cross-sectional view along line 2-2 of the excimer laser 100 shown in Fig. 1. As can be seen in Figure 2, the excimer laser 100 preferably further includes a circulating means 112, such as a fan, for circulating the excimer laser gas through the discharge gap 106 and an optional dedusting unit 202 for dedusting the gas flow through the tube 101. The dedusting unit comprises high voltage wires 203, separated from each other by U-shaped channel 204 extending along the tube 101. Furthermore, two guiding plates 205, which are elongated in the longitudinal direction of the tube 101 are preferably provided for guiding the gas flow through discharge gap 106 and a portion of such gas into dedusting unit 202. After exiting dedusting unit 202, the gas returns to fan 201 to be re-circulated through the laser 101. A detailed description of a suitable dedusting unit 202 for use in connection with the present invention is provided in a concurrently filed patent US 6603790 B. Details of this application are provided above.

The ground electrode 105 is preferably carried by, or mounted to, the electrode plate 111 via a plurality of flow guides 209, which will be referred to again later.

Adjacent to the high voltage electrode 104, two pre-ionizers 206 are provided, which serve to pre-ionize the laser gas to ensure greater homogeneity of the gas discharge in the discharge gap 106.

The pre-ionizers 206 are preferably corona-type pre-ionizers and extend substantially parallel to said high voltage electrode. The pre-ionizers 206 have a coaxial shape with a conductive core 207 surrounded by a tube shaped insulator 208

The corona-type pre-ionizers can be mounted immediately adjacent to the high voltage electrode. In particular, as shown in Fig. 2, the corona-type pre-ionizers should be mounted at the opposing edges of the high voltage electrode so that it is disposed adjacent the electrode face of the high voltage electrode facing the ground electrode.

Although corona-type pre-ionizers are preferred for use as pre-ionizers 206 in connection with the present invention, those skilled in the art will recognize that any of the pre-ionizers known in the art may be used. Furthermore, the insulator of the pre-ionizers can be TEFLON®, or any suitable insulator, but it is preferably a ceramic material. It can also be a fluoride material. Alternatively, any other kind of known pre-ionizer can be used. The pre-ionizers are not necessary for the discharge unit to work. Indeed, excimer lasers were known before the invention of pre-ionizers. Pre-ionization, however makes the gas discharge between the high voltage electrode and the ground electrode more homogeneous and thus more reliable.

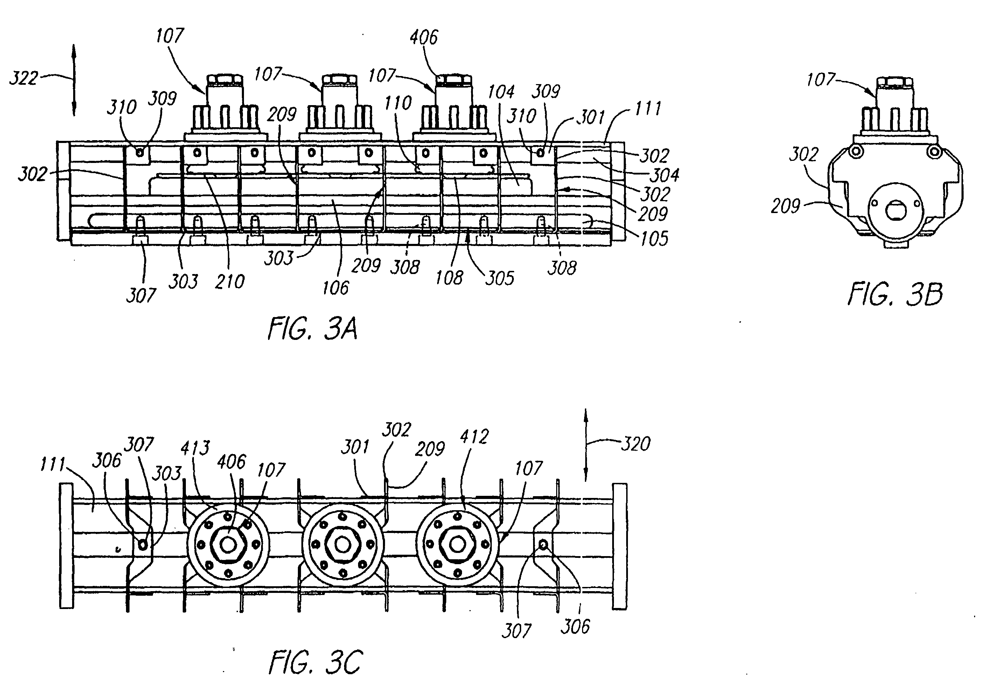

Referring to Figures 3a and 3c the discharge unit 102 comprises three coaxial waveguide-like high voltage ducts 107, extending through holes in the electrode plate 111. The ducts 107 are arranged spaced apart from each other. The holes and the ducts 107 have a circular cross section, as can be seen from Figure 3c. Each of the three ducts 107 is inserted into the respective hole in the electrode plate 111 with a defined tolerance between the insulator element and the hole. As those skilled in the art will appreciate, the number of ducts employed in a particular gas laser 100 will depend on the overall length of the laser.

The ground electrode 105 is preferably carried by, or mounted to, the electrode plate 111. As best seen in Figs. 2 and 3a, preferably a plurality of flow guides 209 are used for this purpose.

The flow guides 209 are preferably made from sheets of metal that extend between the electrode plate and the ground electrode in a plane perpendicular to the longitudinal axis of the electrodes 104, 105. The flow guides plates 209 comprise respectively an upper flange 301, a lower flange 303, and a central flow guiding portion 302 integrally connecting said upper flange 301 to said lower flange 303. Said upper and lower flanges 301, 303 extend perpendicular to each other and to said central flow guiding portion 302. The upper flange 301 is attached to a side face 304 of electrode plate 111, and the lower flange 303 is attached to a bottom face 305 of the ground electrode 105. The central flow guiding portion 302 is preferably aerodynamically profiled in order to minimize flow resistance and turbulences for maintaining a substantially laminar gas flow between the flow guides.

The lower flange 303 preferably includes an oblong hole 306 (shown only at part of the flow guiding plates 209). Hole 306 is oblong in a direction perpendicular to the longitudinal axis of the elongated ground electrode 105. A screw, or other fastening means, 307 is inserted through the hole 306 into a mating threaded hole 308 being provided in the ground electrode 105. The oblong hole 306 allows for adjustments of the ground electrode 105 with respect to the high voltage electrode 104 essentially in the direction indicated by the double-headed arrow 320 in Figure 3c.

The upper flange 301 preferably includes an oblong hole 309. Hole 309 being oblong in a direction perpendicular to the longitudinal axis of the electrode plate 111. A screw, or other fastening means, 310 is inserted through the hole 309 into a mating threaded hole 311 being provided in the high voltage electrode 104. The oblong hole 309 allows an adjustment of the ground electrode 105 with respect to the high voltage electrode 104 essentially in the direction indicated by the double-headed arrow 322 in Figure 3a.

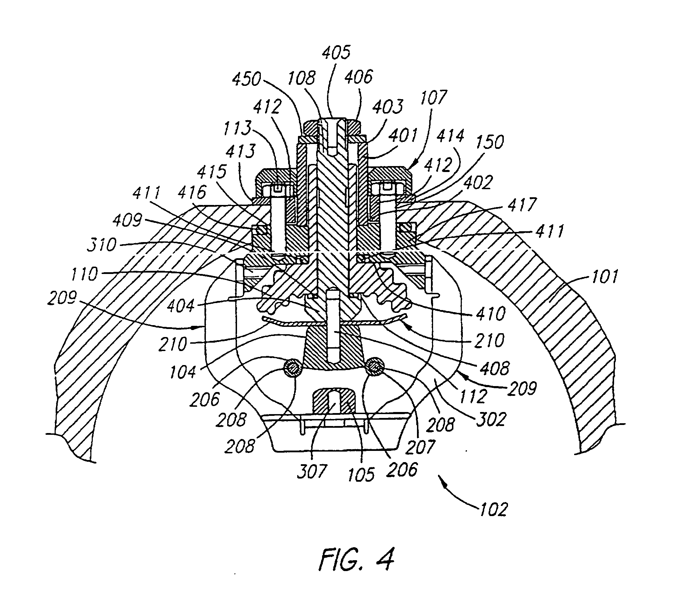

Figure 4 shows a cross section of the discharge unit 102 according to the preferred embodiment of the invention. In particular, Fig. 4 shows an enlarged cross-sectional view of the discharge unit shown in Fig. 2. The angle of view is the same as in Figure 3b.

Each high voltage duct 107 of the laser discharge unit 102 preferably further comprises a sleeve 401 enclosing the core 108 and insulator 110. Sleeve 401 has an inner end 402 supported by the electrode plate 111, and an outer free end 403. The core 108 has an inner end 404 connected to the high voltage electrode 104 and a threaded outer free end 405 extending beyond the free end 403 of the sleeve 401. A nut 406 may be screwed onto the threaded end 405 as shown in Figs. 3c and 4, thereby pressing the sleeve 401 against the electrode plate 111 and tensioning the core 108 by pulling it. Preferably a washer 450 is interposed between nut 406 and insulator 110 to evenly distribute the stresses applied by nut 406 to insulator 110. A threaded stud bolt 112 is used to connect the inner end 404 of the core 108 to the high voltage electrode 104.

The inner end 404 of the core 108 is provided with a core ring shoulder 408, which is pressed against the ceramic insulator element 110 when core 108 is placed under tension. A seal 409 is preferably provided between the ring shoulder 408 and the ceramic insulator element 110.

The ceramic insulator element 110 is also caused to be pressed against the electrode plate 111 by means of the tensioned core 108 via the core ring shoulder 408 at the inner end 404 of the core 108. Preferably a ring shoulder 410 is provided on the insulator element 110 and another seal 411 is provided between the ceramics insulator ring shoulder 410 and the electrode plate 111.

To provide additional sealing, a sealing ring 412 (see also Figures 2 and 3c) preferably surrounds each sleeve 401. Sealing ring 412 may be constructed to have a flange 413 at its outer circumference. Flange 413 is dimensioned so that it is supported by an outer rim 414 of the holes 150 in the tube 101 through which the respective ducts 107 are inserted. Electrode plate 111 is then preferably provided with a ring shoulder 417 facing an inner rim 415 of the tube 101. A metal seal 416 is preferably interposed between shoulder 417 and rim 415. As a result, when the ring 412 and the electrode plate 111 are connected by screws 113 a gas tight seal is provided between the shoulder 417 and the inner rim 415 of the tube 101.

All of the seals 409, 411 and 416 are ring-shaped metal seals in the present embodiment.

## Claims

1. A laser discharge unit (102), comprising:
- an elongated electrode plate (111);
- an elongated high voltage electrode (104);
- an elongated ground electrode (105);
wherein both said high voltage electrode (104) and said ground electrode (105) are mounted to said electrode plate (111) in a distance one from another with their longitudinal axis being substantially parallel, thereby defining a gas discharge gap (106) between said electrodes;
- a plurality of coaxial ducts (107)
wherein each of said ducts (107) extends through a hole in said electrode plate (111) and comprises a central conductive core (108) and an insulator element (110) electrically insulating said core (108) from said electrode plate (111), and wherein said high voltage electrode (104) is electrically connected to said cores (108) of said ducts (107), and said ground electrode (105) is electrically connected to said electrode plate (111).

2. The laser discharge unit (102) according to claim 1, wherein said ducts are inserted into said electrode plate (111) with a defined tolerance between said insulator element (110) and the respective hole in said electrode plate (111) through which the respective duct (107) is inserted.

3. The laser discharge unit (102) according to claim 2, wherein said ducts (107) and holes have a circular cross section.

4. The laser discharge unit (102) according to claim 1, wherein a gastight seal (411) is provided between said ducts (107) and said electrode plate (111).

5. The laser discharge unit (102) according to claim 3, wherein a gastight ring-shaped seal (411) is provided between said ducts and said electrode plate (111).

6. The laser discharge unit (102) according to claim 1, wherein said high voltage electrode (104) is carried by said ducts (107).

7. The laser discharge unit (102) according to claim 6, further comprising a plurality of flow guides (209), and wherein said ground electrode (105) is mounted to said electrode plate (111) using said flow guides (209).

8. The laser discharge unit (102) according to claim 7, wherein said flow guides (209) comprise:
a lower flange (303) attached to a bottom face of said ground electrode (105); and
an upper flange attached to said electrode plate (111 ).

9. The laser discharge unit (102) according to claim 8, wherein:
each of said lower flanges (413) (303) include an oblong hole (306), and said oblong holes (306) are oblong in a direction perpendicular to the longitudinal axis of said elongated ground electrode (105).

10. The laser discharge unit (102) according to claim 8, wherein said upper and lower flanges (303) extend perpendicular to each other and said upper flange (413) is attached to a side face of said electrode plate (111).

11. The laser discharge unit (102) according to claim 10, wherein:
each of said lower flanges (303) include an oblong hole (306), and said oblong holes (306) are oblong in a direction perpendicular to the longitudinal axis of said elongated ground electrode (105).

12. The laser discharge unit (102) according to claim 11, wherein:
each of said upper flanges (413) include a second oblong hole (306), and said second oblong holes (306) are oblong in a direction perpendicular to the longitudinal axis of said electrode plate (111) and said oblong holes (306) in said lower flanges (303).

13. The laser discharge unit (102) according to claim 7, wherein said flow guides (209) comprise metal sheets comprising:
an upper flange (413) attached to said electrode plate (111);
a lower flange (303) attached to a bottom face of said ground electrode (105); and
a central flow-guiding portion integrally connecting said upper flange (413) to said lower flange (303) and extending between said upper and lower flanges (303) in a plane perpendicular to the longitudinal axis of said electrodes.

14. The laser discharge unit (102) according to claim 13, wherein the central flow guiding portion (302) of each of said flow guides (209) is curved or angled away from the electrodes in the plane extending perpendicular to the longitudinal axis of the electrodes.

15. The laser discharge unit (102) according to claim 7, wherein said flow guides (209) comprise:
an upper flange (413) attached to said electrode plate (111);
a lower flange (303) attached to a bottom face of said ground electrode (105); and
a central flow guiding portion (302) integrally connecting said upper flange (413) to said lower flange (303) and extending between said upper and lower flanges (303) in a plane perpendicular to the longitudinal axis of said electrodes, and wherein said central flow guiding portion (302) is aerodynamically profiled in order to minimize flow resistance and turbulences of a gas flowing in a transverse direction through said discharge gap (106).

16. The laser discharge unit (102) according to claim 15, wherein the central flow guiding portion (302) of each of the flow guides (209) is curved or angled away from the electrodes in the plane extending perpendicular to the longitudinal axis of the electrodes.

17. The laser discharge unit (102) according to claim 1, which is adapted to be used in an excimer laser (100).

18. A module-type gas laser with a laser discharge unit (102) as claimed in one of the preceding claims, further comprising
a tube(101) containing a gas mixture comprising a laser gas;
lasing gas circulation means (201) disposed within said tube (101); and
a first laser optical element (116) disposed at one end of said discharge gap (106); and
a second laser optical element (116) disposed at the second end of said discharge gap (106);
wherein said discharge unit (102) is a module-type discharge unit (102), such that it is removably mountable into said tube (101) as one integrated unit, and said discharge electrodes are adjustable with respect to each other when said discharge unit (102) is completely removed from said tube (101).

## Patentansprüche

1. Laserentladungseinheit (102) mit:
- einer langgestreckten Elektrodenplatte (111);
- einer langgestreckten Hochspannungselektrode (104);
- einer langgestreckten Erdungselektrode (105);
wobei sowohl die Hochspannungselektrode (104) als auch die Erdungselektrode (105) an der Elektrodenplatte (111) in einem Abstand voneinander montiert sind, wobei ihre Längsachse im wesentlichen parallel ist, wodurch ein Gasentladungsspalt (106) zwischen den Elektroden festgelegt wird;
- einer Vielzahl von koaxialen Kanälen (107)
wobei sich jeder der Kanäle (107) durch ein Loch in der Elektrodenplatte (111) erstreckt und einen zentralen leitenden Kern (108) und ein Isolatorelement (110) umfaßt, das den Kern (108) elektrisch von der Elektrodenplatte (111) isoliert, und wobei die Hochspannungselektrode (104) mit den Kernen (108) der Kanäle (107) elektrisch verbunden ist und die Erdungselektrode (105) mit der Elektrodenplatte (111) elektrisch verbunden ist.

2. Laserentladungseinheit (102) nach Anspruch 1, wobei die Kanäle in die Elektrodenplatte (111) mit einer festgelegten Toleranz zwischen dem Isolatorelement (110) und dem jeweiligen Loch in der Elektrodenplatte (111), durch das der jeweilige Kanal (107) eingesetzt ist, eingesetzt sind.

3. Laserentladungseinheit (102) nach Anspruch 2, wobei die Kanäle (107) und Löcher einen kreisförmigen Querschnitt aufweisen.

4. Laserentladungseinheit (102) nach Anspruch 1, wobei eine gasdichte Dichtung (411) zwischen den Kanälen (107) und der Elektrodenplatte (111) vorgesehen ist.

5. Laserentladungseinheit (102) nach Anspruch 3, wobei eine gasdichte, ringförmige Dichtung (411) zwischen den Kanälen und der Elektrodenplatte (111) vorgesehen ist.

6. Laserentladungseinheit (102) nach Anspruch 1, wobei die Hochspannungselektrode (104) durch die Kanäle (107) getragen wird.

7. Laserentladungseinheit (102) nach Anspruch 6, welche ferner eine Vielzahl von Strömungsführungen (209) umfaßt, und wobei die Erdungselektrode (105) an der Elektrodenplatte (111) unter Verwendung der Strömungsführungen (209) montiert ist.

8. Laserentladungseinheit (102) nach Anspruch 7, wobei die Strömungsführungen (209) umfassen:
einen unteren Flansch (303), der an einer Unterseite der Erdungselektrode (105) befestigt ist; und
einen oberen Flansch, der an der Elektrodenplatte (111) befestigt ist.

9. Laserentladungseinheit (102) nach Anspruch 8, wobei:
jeder der unteren Flansche (413) (303) ein längliches Loch (306) umfaßt und
die länglichen Löcher (306) in einer Richtung senkrecht zur Längsachse der langgestreckten Erdungselektrode (105) länglich sind.

10. Laserentladungseinheit (102) nach Anspruch 8, wobei sich der obere und der untere Flansch (303) senkrecht zueinander erstrecken und der obere Flansch (413) an einer Seitenfläche der Elektrodenplatte (111) befestigt ist.

11. Laserentladungseinheit (102) nach Anspruch 10, wobei:
jeder der unteren Flansche (303) ein längliches Loch (306) umfaßt und die länglichen Löcher (306) in einer Richtung senkrecht zur Längsachse der langgestreckten Erdungselektrode (105) länglich sind.

12. Laserentladungseinheit (102) nach Anspruch 11, wobei:
jeder der oberen Flansche (413) ein zweites längliches Loch (306) umfaßt und die zweiten länglichen Löcher (306) in einer Richtung senkrecht zur Längsachse der Elektrodenplatte (111) und zu den länglichen Löchern (306)
in den unteren Flanschen (303) länglich sind.

13. Laserentladungseinheit (102) nach Anspruch 7, wobei die Strömungsführungen (209) Metallbleche umfassen, mit:
einem oberen Flansch (413), der an der Elektrodenplatte (111) befestigt ist; einem unteren Flansch (303), der an einer Unterseite der Erdungselektrode (105) befestigt ist; und
einem zentralen Strömungsführungsteil, der den oberen Flansch (413) einteilig mit dem unteren Flansch (303) verbindet und sich zwischen dem oberen und dem unteren Flansch (303) in einer Ebene senkrecht zur Längsachse der Elektroden erstreckt.

14. Laserentladungseinheit (102) nach Anspruch 13, wobei der zentrale Strömungsführungsteil (302) von jeder der Strömungsführungen (209) von den Elektroden in der Ebene, die sich senkrecht zur Längsachse der Elektroden erstreckt, weggekrümmt oder abgewinkelt ist.

15. Laserentladungseinheit (102) nach Anspruch 7, wobei die Strömungsführungen (209) umfassen:
einen oberen Flansch (413), der an der Elektrodenplatte (111) befestigt ist; einen unteren Flansch (303), der an einer Unterseite der Erdungselektrode (105) befestigt ist; und
einen zentralen Strömungsführungsteil (302), der den oberen Flansch (413) einteilig mit dem unteren Flansch (303) verbindet und sich zwischen dem oberen und dem unteren Flansch (303) in einer Ebene senkrecht zur Längsachse der Elektroden erstreckt, und wobei der zentrale Strömungsführungsteil (302) aerodynamisch profiliert ist, um den Strömungswiderstand und Turbulenzen eines Gases, das in einer Querrichtung durch den Entladungsspalt (106) strömt, zu minimieren.

16. Laserentladungseinheit (102) nach Anspruch 15, wobei der zentrale Strömungsführungsteil (302) von jeder der Strömungsführungen (209) von den Elektroden in der Ebene, die sich zur Längsachse der Elektroden senkrecht erstreckt, weggekrümmt oder abgewinkelt ist.

17. Laserentladungseinheit (102) nach Anspruch 1, welche dazu ausgelegt ist, in einem Excimerlaser (100) verwendet zu werden.

18. Gaslaser vom Modultyp mit einer Laserentladungseinheit (102) nach einem der vorangehenden Ansprüche, welcher ferner folgendes umfaßt
eine Röhre (101), die ein Gasgemisch enthält, welches ein Lasergas umfaßt;
eine Lasergas-Zirkulationseinrichtung (201), die innerhalb der Röhre (101) angeordnet ist; und
ein erstes laseroptisches Element (116), das an einem Ende des Entladungsspalts (106) angeordnet ist; und
ein zweites laseroptisches Element (116), das am zweiten Ende des Entladungsspalts (106) angeordnet ist;
wobei die Entladungseinheit (102) eine Entladungseinheit (102) vom Modultyp ist, so daß sie als eine integrierte Einheit entfernbar in der Röhre (101) montierbar ist, und die Entladungselektroden relativ zueinander einstellbar sind, wenn die Entladungseinheit (102) vollständig aus der Röhre (101) entfernt ist.

## Revendications

1. Unité de décharge pour laser comprenant :
- une plaque allongée d'électrode (111),
- une électrode allongée haute tension (104),
- une électrode allongée de masse (105),
dans laquelle à la fois ladite électrode haute tension (104) et ladite électrode de masse (105) sont montées à ladite plaque d'électrode (111) à distance l'une de l'autre, leurs axes longitudinaux étant substantiellement parallèles, définissant ainsi un espace de décharge de gaz (106) entre lesdites électrodes ;
- une pluralité de lignes coaxiales (107)
dans laquelle chacune desdites lignes (107) s'étend au travers d'un trou dans ladite plaque d'électrode (111) et comprend une âme conductrice centrale (108) et un élément d'isolation (110) isolant électriquement ladite âme (108) de ladite plaque d'électrode (111) et dans laquelle ladite électrode haute tension (104) est raccordée électriquement aux dites âmes (108) desdites lignes (107) et ladite électrode de masse (105) est raccordée électriquement à ladite plaque d'électrode (111).

2. Unité de décharge pour laser (102) selon la revendication 1, dans laquelle lesdites lignes sont insérées dans ladite plaque d'électrode (111) avec une tolérance définie entre ledit élément d'isolation (110) et le trou respectif dans ladite plaque d'électrode (111) au travers duquel la ligne respective (107) est insérée.

3. Unité de décharge pour laser (102) selon la revendication 2, dans laquelle lesdites lignes (107) et lesdits trous possèdent une section transversale circulaire.

4. Unité de décharge pour laser (102) selon la revendication 1, dans laquelle un joint étanche aux gaz (411) existe entre lesdites lignes (107) et ladite plaque d'électrode (111).

5. Unité de décharge pour laser (102) selon la revendication 3, dans laquelle un joint annulaire étanche aux gaz (411) existe entre lesdites lignes et ladite plaque d'électrode (111).

6. Unité de décharge pour laser (102) selon la revendication 1, dans laquelle ladite électrode haute tension (104) est portée par lesdites lignes (107).

7. Unité de décharge pour laser (102) selon la revendication 6, comprenant en outre une pluralité de guides d'écoulement (209) et dans laquelle ladite électrode de masse (105) est montée à ladite plaque d'électrode (111) en utilisant lesdits guides d'écoulement (209).

8. Unité de décharge pour laser (102) selon la revendication 7, dans laquelle lesdits guides d'écoulement (209) comprennent :
un flasque inférieur (303) attaché à une face inférieure de ladite électrode de masse (105) et
un flasque supérieur attaché à ladite plaque d'électrode (111).

9. Unité de décharge pour laser (102) selon la revendication 8, dans laquelle :
chacun desdits flasques inférieurs (413) (303) comprend un trou oblong (306) et lesdits trous oblongs (306) sont oblongs dans une direction perpendiculaire à l'axe longitudinal de ladite électrode allongée de masse (105).

10. Unité de décharge pour laser (102) selon la revendication 8, dans laquelle lesdits flasques supérieurs et inférieurs (303) s'étendent perpendiculairement l'un par rapport à l'autre et ledit flasque supérieur (413) est attaché à une face latérale de ladite plaque d'électrode (111).

11. Unité de décharge pour laser (102) selon la revendication 10, dans laquelle :
chacun desdits flasques inférieurs (303) comprend un trou oblong (306) et lesdits trous oblongs (306) sont oblongs dans une direction perpendiculaire à l'axe longitudinal de ladite électrode allongée de masse (105).

12. Unité de décharge pour laser (102) selon la revendication 11, dans laquelle :
chacun desdits flasques supérieurs (413) comprend un deuxième trou oblong (306) et lesdits deuxièmes trous oblongs (306) sont oblongs dans une direction perpendiculaire à l'axe longitudinal de ladite plaque d'électrode (111) et aux dits trous oblongs (306) dans lesdits flasques inférieurs (303).

13. Unité de décharge pour laser (102) selon la revendication 7, dans laquelle lesdits guides d'écoulement (209) comprennent des feuilles de métal comprenant :
un flasque supérieur (413) attaché à ladite plaque d'électrode (111),
un flasque inférieur (303) attaché à une face inférieure de ladite électrode de masse (105) et
une portion centrale de guidage d'écoulement raccordant intégralement ledit flasque supérieur (413) audit flasque inférieur (303) et s'étendant entre lesdits flasques supérieurs et inférieurs (303) dans un plan perpendiculaire à l'axe longitudinal desdites électrodes.

14. Unité de décharge pour laser (102) selon la revendication 13, dans laquelle la portion centrale de guidage (302) de chacun desdits guides d'écoulement (209) est courbée ou mise à angle en s'écartant des électrodes dans le plan s'étendant perpendiculairement à l'axe longitudinal des électrodes.

15. Unité de décharge pour laser (102) selon la revendication 7, dans laquelle lesdits guides d'écoulement (209) comprennent :
un flasque supérieur (413) attaché à ladite plaque d'électrode (111),
un flasque inférieur (303) attaché à une face inférieure de ladite électrode de masse (105) et
une portion centrale de guidage d'écoulement (302) raccordant intégralement ledit flasque supérieur (413) audit flasque inférieur (303) et s'étendant entre lesdits flasques supérieurs et inférieurs (303) dans un plan perpendiculaire à l'axe longitudinal desdites électrodes et dans laquelle ladite portion centrale de guidage (302) est profilée de façon aérodynamique de façon à minimiser la résistance à l'écoulement et les turbulences d'un gaz s'écoulant selon une direction transversale au travers dudit espace de décharge de gaz (106).

16. Unité de décharge pour laser (102) selon la revendication 15, dans laquelle la portion centrale de guidage d'écoulement (302) de chacun des guides d'écoulement (209) est courbée ou mise à angle en s'écartant des électrodes dans le plan s'étendant perpendiculairement à l'axe longitudinal des électrodes.

17. Unité de décharge pour laser (102) selon la revendication 1 adaptée à une utilisation dans un laser excimer (100).

18. Laser à gaz de type modulaire comportant une unité de décharge pour laser (102) selon l'une quelconque des revendications précédentes, comprenant en outre
un tube (101) contenant un mélange de gaz comprenant un gaz laser,
un moyen de circulation (201) de gaz lasant disposé à l'intérieur dudit tube (101) et
un premier élément optique laser (116) disposé en une extrémité de ladite décharge de gaz (106) et
un deuxième élément optique laser (116) disposé à la deuxième extrémité de ladite décharge de gaz (106),
dans lequel ladite unité de décharge (102) est une unité de décharge de type modulaire (102) de façon telle qu'elle puisse être montée de manière amovible dans ledit tube (101) en tant qu'unité intégrée monobloc et lesdites électrodes de décharge sont réglables les unes par rapport aux autres lorsque ladite unité de décharge (102) est complètement ôtée dudit tube (101).
